# EUROPEAN PATENT APPLICATION

(11) **EP 4 782 267 A1**
(43) Date of publication of application: **29.07.2026**
(21) Application number: 25153729.6
(22) Date of filing: 24.01.2025
(51) Int. Cl.: B60N 2/015, B64D 11/06

(54) **QUICK CONNECT AND RELEASE SYSTEM FOR THE ATTACHMENT OF EQUIPMENT ON A VEHICLE STRUCTURE SUCH AS A FLOOR**

(71) Applicant: Aernnova Aerospace, 01510 Miñano (ES)
(72) Inventor: Aliaga Maraver, Luis, Madrid (ES); Castillo Acero, Miguel Angel, Madrid (ES); Cruz Palacios, David, Madrid (ES); Martin de la Escalera, Federico, Madrid (ES)

(57) **Abstract**

A quick connect and release system for the attachment of equipment to a vehicle structure, in particular on a floor, comprising a rail with a non-straight contour attached to the vehicle structure and a quick-connect device attached to the equipment. The quick-connect device can be configured to at least two different configurations, the open position where it can be installed on or removed from the rail, and the closed position where it is clamped to the rail. A third, intermediate position, where the quick-connect device may slide along the rail but cannot be removed from it may be included in the system.

## Description

### TECHNICAL FIELD OF THE INVENTION

The present invention is included in the field of vehicle structures, in particular that of aircraft structures, fuselage interiors and passenger cabins, but it is also applicable to other types of vehicles which include passenger cabins or cargo areas, such are trains, buses, ships or other.

The invention refers to a system for the attachment of different equipment to a vehicle structure, usually a vehicle floor, although it can also be used to attach equipment to a wall of a vehicle cabin, or to other structural elements. The equipment may be a seat, an aircraft monument, a stretcher, a container, cargo holders, tie-down rings, etc.

### BACKGROUND OF THE INVENTION

Some vehicles intended primarily for the transport of passengers (usually aircraft, but also other vehicles comprising large passenger cabins, such are trains) include systems for the attachment of passenger seats to the floor that allow the reconfiguration of the cabin, modifying the distance between the seat rows and modifying the quantity of seats in the cabin, changing the configuration from passengers to cargo by removing the seats, etc. Different attachment systems exist to allow for an easy reconfiguration of passenger cabins, but the most used is the combination of specific rails fixed on the floor of the vehicle cabin and specific fittings in the seat legs, allowing for an easy attachment of the fittings to the rails in many different places along the rails length.

These systems are not only used in passenger cabins for easy reconfiguration of seats, but also typically in cargo areas, for easy and flexible securing of cargo to different locations in the cargo bay. Although these attachment systems are usually located on the floor, they can also be used on walls, or even ceilings, if convenient for some applications.

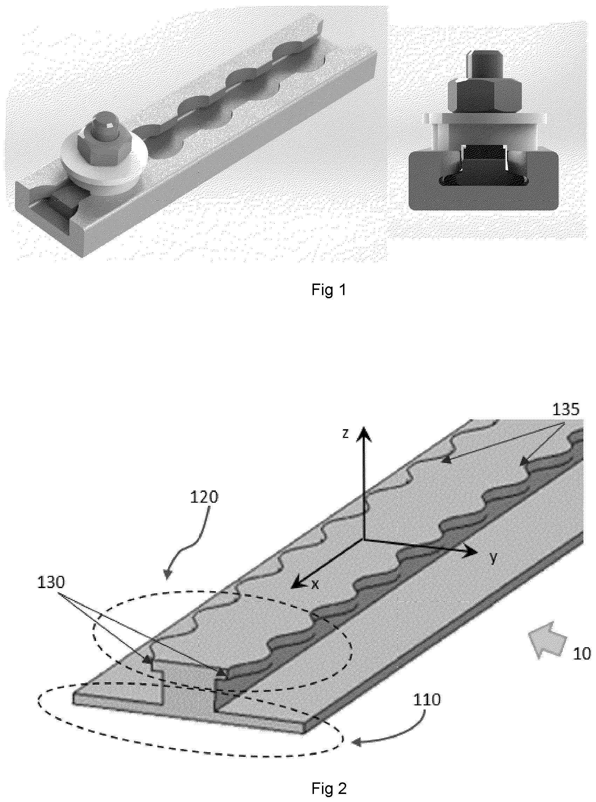

The most used system includes slotted rails on the fixed structure (floor, etc) and studs in the equipment (Fig 1), where the stud is introduced inside the rail slot and fixed by actioning some blocking device, usually a simple nut or equivalent system that forces the stud against the rail walls, thus fixing the equipment to the structure through the friction of the stud against the rail. US6260813 presents a variation of this system.

Although those systems are widely used, they are not intended for quick reconfiguration of the cabins. The installation and removal of the equipment requires to adjust the nuts or equivalent systems, which is not an instant action, and also requires that the installation is made with the proper torque to guarantee the right fixation of the equipment to the rail. All this implies an assembly process that is time-consuming, and far from what would be an ideal "quick-connect" or "quick-release" concept.

Some alternative concepts have been devised in search of this quick-connect concept, such as the one described on EP2707285, but they usually are complex to manufacture, including many subparts and requiring complex machining operations, leading to high costs. In addition to that, for safety reasons it is important that a quick-connect system includes some means to easily identify visually whether the system is correctly clamped to the rail or whether it is mounted on the rail but in an unclamped position.

The present invention describes a quick-connect and disconnect system for the attachment of equipment to vehicle floors or other fixed structures that is simple and inexpensive to manufacture, and which also allows an easy identification of the clamped and unclamped positions.

### BRIEF DESCRIPTION OF DRAWINGS

Present specification is complemented with a set of drawings, illustrative of the preferred example and never limiting the invention.
Fig 1 shows the typical state of the art for current seat rails and similar attachment systems.
Fig 2 shows the rail of the system of the invention.
Fig 3 shows alternative designs of the rail of the invention with different cross-sections in their lower part.
Fig 4 shows the quick connect device of the invention.
Fig 5 shows a quick connect device with its first element (210) being a separate element not rigidly attached to the second (220) or third (230) elements.
Fig 6 shows a quick connect device with its first element (210) rigidly attached to the second (220) element but not to the third (230) element.
Fig 7 shows the configuration of the second (220) and third (230) elements of the quick connect device, comprising an inner contoured feature (250) and a grabbing feature (260).
Fig 8 shows the quick connect device (20) installed on the rail (10) in closed configuration.
Fig 9 shows a longitudinal view along the rail of the quick connect device (20) installed on the rail (10) in closed configuration.
Fig 10 shows a longitudinal view along the rail of the quick connect device (20) installed on the rail (10) in open configuration.
Fig 11 shows a longitudinal view along the rail of the quick connect device (20) installed on the rail (10) in an intermediate, semi-open configuration.
Fig 12 shows a quick connect device including guides on its second (220) and third (230) elements for the relative movement between them.
Fig 13 shows a quick connect device with a first element (210) being a separate element not rigidly attached to the second (220) or third (230) elements, where the first element include the guides for the movement of the second and third elements.

### DESCRIPTION OF THE INVENTION

The present invention introduces a new quick-connect and disconnect system for the attachment of equipment on a vehicle floor or alternative fixed structure that comprises a rail (10) attached to the structure of the vehicle and quick-connect devices (20) attached to the equipment (seats or other).

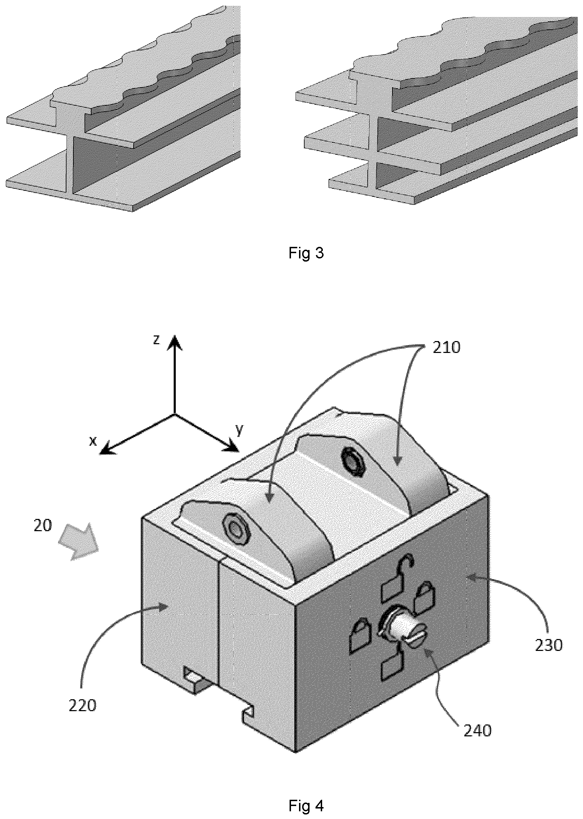

The rail (10, Fig 2) comprises a first lower part (110) designed to be attached to the floor of the vehicle (or fixed structure in general), which can have many different cross sections (examples on Fig 3) depending on the rigidity requirements and the assembly system used to attach the rail to the structure; and a second upper part (120) with a T-shaped cross section designed for the attachment of the quick-connect devices (20). The lateral flanges (130) of the upper T-shaped section of the rail include a non-straight contour (135), usually with a scalloped shape, although other alternative non-straight shapes may be used, such as sawtooth, straight or sloped steps, or other.

The quick-connect devices (20, Fig 4) are mechanical assemblies that comprise a first element (210) designed to be fixed to the equipment (seat or whatever is going to be attached to the vehicle structure) by any conventional means, a second (220) and third (230) elements designed to clamp the rail (10), and a controller (240) that controls the different configurations of the device: open (for assembly and disassembly from the rail), intermediate or semi-open (sliding on the rail) and closed (clamping the rail). The second and third elements are separated elements capable of moving away from or towards each other in a direction (y) perpendicular to the longitudinal direction (x) of the rail (10) and parallel to the vehicle structure to which the rail is attached, being this movement governed by the controller (240).

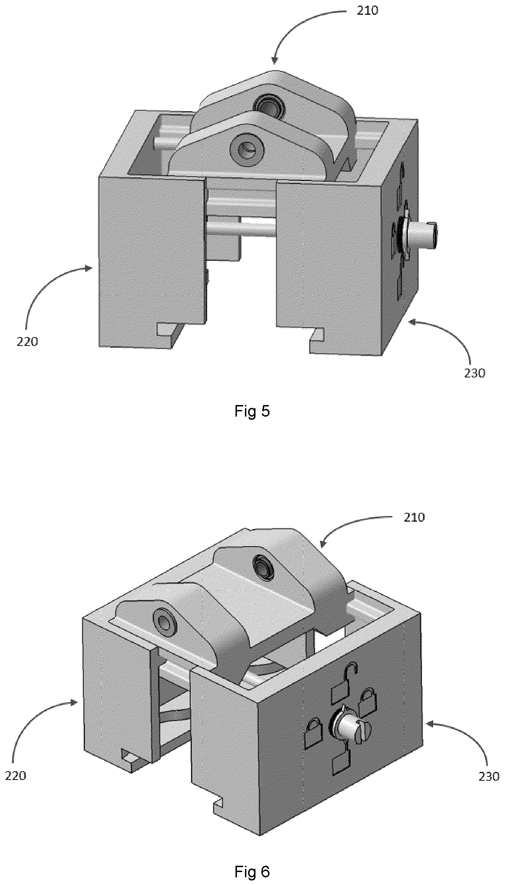

The first element (210) may be a separate element not rigidly attached to the second (220) or third (230) elements (Fig 5), or it may form an integral part with one of those second or third elements, being rigidly attached to one of them (but not to both) (Fig 6).

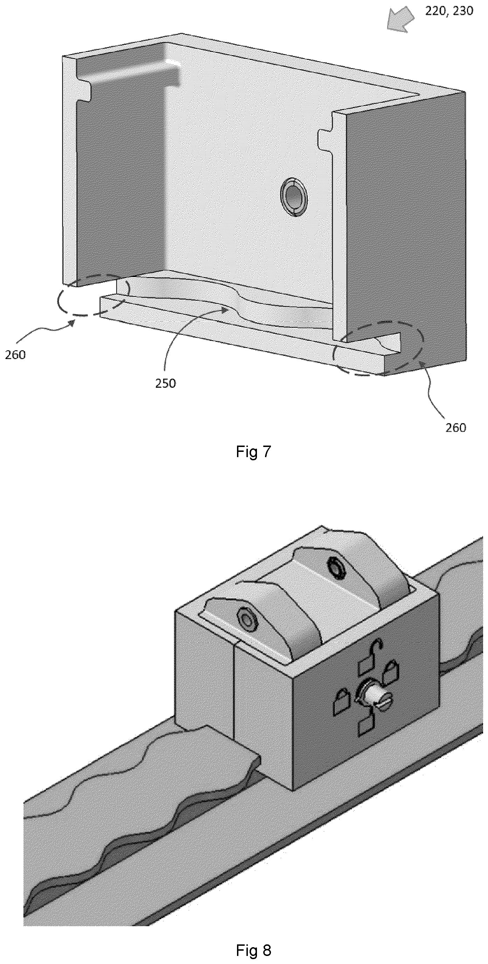

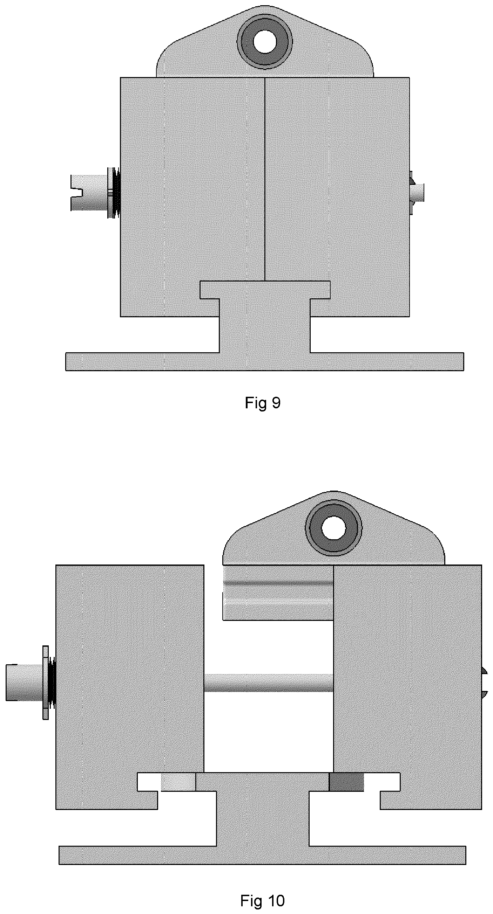

The second (220) and third (230) elements include an inner contoured feature (250, Fig 7) designed to match the non-straight contour (125) of the upper lateral flanges (130) of the rail, and a grabbing feature (260) in their lower part designed to grab the upper lateral flanges (130) of the rail. This grabbing feature may usually be a groove, although any other feature able to grab the upper lateral flanges of a rail with a T section may be used. This groove or alternative feature is dimensioned to grab the upper lateral flanges of the rail with a small clearance that allows the second and third elements to easily slide on the flanges of the rail, while at the same time grabbing it without allowing a significant displacement in the vertical direction z (Fig 8, Fig 9).

The second and third elements can move away from or closer to each other, clamping or unclamping the rail. When the second and third elements are in their nearest position to each other, we say that the device is in the closed position; when the second and third elements are in their farthest position to each other, we say that the device is in the open position.

When the second and third elements are moved to the closed position, their inner contoured sections (250) of both second and third elements fit the contoured borders (135) of the upper lateral flanges (130) of the rail (10), locking the quick-connect device (20) to the rail in the longitudinal direction x (along the rail) and in the lateral direction y (perpendicular to the rail, horizontally), while the grabbing feature (260) locks the quick-connect device (20) to the rail in the vertical direction z (perpendicular to the rail, vertically).

In the totally open configuration (Fig 10), the second and third elements (220, 230) are separated enough to free the rail both from their inner contoured sections (250) and from their grabbing features (260), allowing the quick-connect device (20) to be removed from the rail.

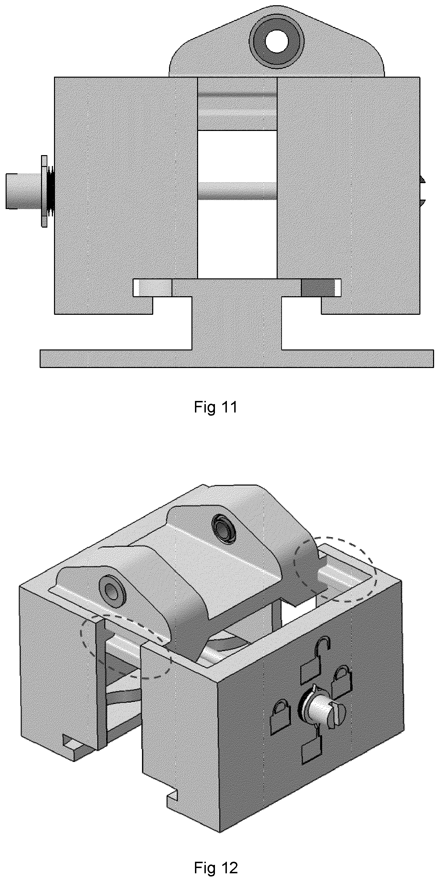

The quick-connect device may include an intermediate, semi-open configuration (Fig 11) where the second and third elements (220, 230) are separated enough to free the rail from their inner contoured sections (250) but not from their grabbing features (260), allowing the quick-connect device (20) to slide along the rail in the longitudinal direction (x), but not to be removed from it in the vertical direction (z).

The controller (240) is the device that controls the approach or distance between the second and third elements, allowing them to be in the totally open, intermediate (semi-open) or closed positions. In fact, although the inclusion of the controller in the quick-connect device is the preferred option, it is not a requirement for the functionality of the system; the controller may be absent and the movement between the second (220) and third (230) elements of the quick-connect device may be performed manually, only adding a simple system to lock the second and third elements in the closed position.

### DESCRIPTION OF PARTICULAR EMBODIMENTS OF THE INVENTION

The invention described in previous paragraphs may be implemented with multiple variations.

Many of these variations refer to the presence or absence of a controller (240) in the quick-connect device (20), and the type of controller in the case it is included.

In one of the simplest embodiments, the quick-connect device does not include any controller (240). In that case, it only includes any locking means to keep the second (220) and third (230) elements locked together when they are configured in the closed position. The change of configuration between the closed and the open position is then performed manually, by unlocking the second and third elements and moving them manually open.

When the controller (240) is included, which is the preferred solution in terms of functionality and ease of operation, one of the simplest embodiments for the controller is a shaft that runs through the second and third elements, allowing them to slide on the shaft moving closer and farther from each other, and comprising stops at its ends to prevent the second and third elements to slide out of the shaft. In this typical embodiment, the controller also includes a spring that is discharged when the second and third elements of the quick-connect device are situated in the intermediate position (semi-open), and that is charged (for example, compressed) when the second and third elements are moved to the totally open position, and is also charged (for example, stretched) when the second and third elements are moved to the closed position.

In this embodiment of the invention, the controller preferably configures the quick-connect device from one configuration to another with a quarter-turn of the controller shaft: in the central position, the spring is unloaded and the quick-connect device is semi-open in the intermediate position; with a quarter-turn of the controller from the central position to one side, the spring is loaded and the quick-connect device is totally open; and with a quarter-turn of the controller from the central position to the other side, the spring is also loaded and the quick-connect device is closed and clamped to the rail.

In other embodiments of the inventions, the second (220) or third (230) elements of the quick-connect device (20) include features that act as guides for the movement of the second and third elements towards or away from each other. In Fig 12 an example of those guides can be seen.

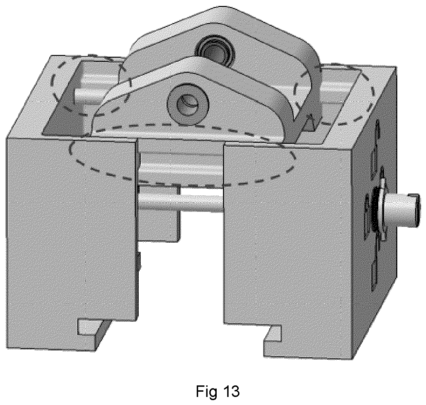

As said previously, the first element (210) of the quick-connect device may be an independent element able to move in relation to the second (220) and third (230) elements, or may be integrated into one of those second or third elements. In the case of the first element (210) being an independent part, it may include the guides for the movement of the second and third elements towards or away from each other (Fig 13).

## Claims

1. A quick connect and release system for the attachment of equipment to a vehicle structure, comprising a rail (10) attached to the vehicle structure and a quick-connect device (20) attached to the equipment, wherein the rail (10) comprises a first lower part (110) for the attachment of the rail (10) to the fixed structure of the vehicle, and a second upper part (120) with a T-shaped cross section that comprises two lateral flanges (130) with a non-straight contour (135), the quick connect device (20) comprising mobile parts allowing for at least two different configurations of the quick-connect device (20), the open configuration wherein the quick-connect device (20) can be installed on the rail (10) or removed from it, and the closed configuration wherein the quick-connect device (20) cannot be installed on the rail (10) or removed from it, nor can substantially move in relation to the rail (10) when installed on it,
**characterized in that**
• the quick-connect device (20) comprises a first element (210) for attachment to the equipment, a second element (220) and a third element (230) for attachment to the rail (10), wherein
• the second (220) and third (230) elements comprise an inner contoured feature (250) that matches the non-straight contour (135) of the lateral flanges (130) of the rail (10), and also comprise a grabbing feature (260) designed to grab the upper lateral flanges (130) of the rail (10), and
• the second (220) and third (230) elements can move away from or closer to each other in a direction (y) substantially perpendicular to the longitudinal axis (x) of the rail (10) and substantially parallel to the surface of the vehicle structure to which the rail (10) is attached, and
• the quick-connect device further comprises locking means to lock the second (220) and third (230) elements in the closed configuration.

2. The quick connect and release system according to claim 1 wherein the quick-connect device (20) further comprises a controller (240) that controls the distance between the second (220) and the third (230) elements

3. The quick connect and release system according to claim 2 wherein the locking means to lock the second (220) and third (230) elements in the closed configuration are incorporated into the controller (240).

4. The quick connect and release system according to any of the claims 1 to 3 wherein the vehicle structure is a floor.

5. The quick connect and release system according to any of the claims 1 to 4 wherein the grabbing feature (260) of the second (220) and third (230) elements is a groove.

6. The quick connect and release system according to any of the claims 1 to 5 wherein the first element (210) of the quick-connect device (20) is jointly and severally fixed to the second element (220) or to the third element (230), but not to both.

7. The quick connect and release system according to any of the claims 1 to 5 wherein the first element (210) of the quick-connect device (20) is an independent part that can move in relation to the second (220) and the third (230) elements of the quick-connect device (20) in the direction (y) perpendicular to the longitudinal axis (x) of the rail (10) and parallel to the vehicle structure to which the rail (10) is attached.

8. The quick connect and release system according to any of the claims 2 to 7 wherein the quick-connect device (20) may be configured to an intermediate configuration between the open and closed configurations in which it cannot be installed or released from the rail (10), but can slide on the rail if previously installed on it.

9. The quick connect and release system according to claim 8 wherein the controller (240) comprises a spring or equivalent elastic means that is loaded when the quick-connect device (20) is configured in the open or closed configuration and is unloaded when it is configured in the intermediate configuration.

10. The quick connect and release system according to any of the claims 8 or 9 wherein the quick-connect device (20) is configured from one configuration to another with a quarter turn of the controller (240).
